# EUROPEAN PATENT APPLICATION

(11) **EP 2 326 063 A1**
(43) Date of publication of application: **25.05.2011**
(21) Application number: 09812841.6
(22) Date of filing: 24.08.2009
(51) Int. Cl.: H04M 1/00, H04M 1/56

(54) **COMMUNICATION TERMINAL, INCOMING COMMUNICATION NOTIFICATION METHOD, AND PROGRAM**

(30) Priority: 09.09.2008 JP 2008230780
(71) Applicant: Panasonic Corporation, Kadoma-shi Osaka 571-8501 (JP)
(72) Inventor: NAKAO, Masatoshi, 2-1-61, Shiromi, Chuo-ku, Osaka 540-6207 (JP)
(74) Representative: Grünecker, Kinkeldey, Stockmair & Schwanhäusser Anwaltssozietät
(86) International application number: PCT/JP2009/004073
(87) International publication number: WO 2010/029692

(57) **Abstract**

Means is provided for, even when a user does not previously register information that can identify a counterparty, such as a telephone number or mail address, determining the priority with respect to an incoming from a counterparty of which there is an outgoing record to respond efficiently and effectively. In a portable communication terminal 1, when an outgoing to the outside is made by an outgoing unit 110, an outgoing history storage unit 210 registers its record in an outgoing communication history data 10, together with an identifier for identifying a communication counterparty 900 which functions as an outgoing destination. When receiving an incoming from the outside, an outgoing history detection unit 300 searches the outgoing communication history data 10 to confirm whether there is a record which has been transmitted from the own terminal or not. In the case where, as a result of the search, a coincident identifier is registered, a notification control unit 400 instructs a notification unit 500 to perform notification in accordance with the priority of the incoming.

## Description

### Technical Field

The present invention relates to a communication terminal having a communication function, such as a portable telephone or a personal computer.

### Background Art

A communication device such as a portable telephone receives an incoming from any caller, and generates a notification signal for notifying the user of the incoming, such as a ring tone. In a communication device having a mail function, there is a case where, when receiving a mail from any sender, a reception tone or screen display for notifying of the reception is performed. In any case, a method in which information for identifying the caller or the sender is displayed simultaneously with the notifying is usually employed.

In these kinds of notification, information for identifying the caller or the sender is a telephone number notified by the caller, or a mail address in the case of a mail. In the case where the telephone number or the mail address is previously registered in the terminal, the name and image of the caller or the sender can be displayed, and moreover it is usual to change also kinds of a ring tone and vibration.

With respect to a configuration for notifying the telephone number of the caller to the counterparty and displaying the name on a screen, the technique disclosed in Patent Literature 1 is known. With respect to a technique for, based on the notified telephone number of the counterparty, controlling the operation of the own terminal when an incoming is received, the technique disclosed in Patent Literature 2 is known.

In Patent Literature 1, when an incoming call occurs, the name of the counterparty which is previously stored is displayed on a screen together with an identification number sent from a digital network, whereby, when the incoming is received, the caller can be identified before responding to the call.

Patent Literature 2 describes that it is confirmed whether an identifying number which, when the incoming is received, is notified from the counterparty is registered in the own terminal or not, and, if already registered, the incoming is rejected. Therefore, it is not only possible that the user who receives the incoming knows who is the caller, but also it is automatically determined that the incoming is unwanted or given preference, whereby the trouble of determining the response priority can be reduced.

### Citation List

### Patent Literature

Patent Literature 1: Japanese Patent No. 2,610,266
Patent Literature 2: JP-60-146563A

### Summary of Invention

### Technical Problem

When an incoming call is received, it is often that the determination on whether the incoming call is to be answered or not depends on the calling party. When an incoming is received by a portable telephone, usually, information (for example, the name and the telephone number) related to the calling party is displayed on a screen. Based on the information displayed on the screen, therefore, the user will determine the subsequent operation.

In the case where the user is not well acquainted with the calling party, even when the user knows the telephone number of the calling party, however, it is seldom that the telephone number is previously registered in the user's own portable telephone. In many cases, even in the case where an incoming is received from the counterparty to whom the user has made an outgoing, only the telephone number of the counterparty is displayed on the screen because personal information related to the calling party is not registered, and hence it is difficult to perform an immediate confirm whether the calling party is the expected party or not.

In the case where an incoming is received from a specific party whose telephone number, mail address, and the like are registered, it is possible to use the function of changing the notifying method such as kinds of a ring tone and vibration. In the case where an incoming is received from an unregistered party, however, the function cannot be used, resulting in that it is difficult to answer the call preferentially over an incoming from any party.

The invention has been conducted in view of such circumstances. It is an object of the invention to provide a portable communication terminal and method in which, even in the case where information of the counterparty is not intentionally registered, when an incoming is received, it is possible to determine the priority and efficiently and effectively respond to the incoming, and also a program which performs preference determination and controls.

### Solution to Problem

The portable communication terminal according to the invention includes: an outgoing unit which transmits a signal to an outside; an incoming unit which receives a signal from the outside; a notification unit which notifies of reception of the signal; an outgoing history storage unit in which an outgoing record is stored; an outgoing history detection unit which, in a case where the incoming is sensed by the incoming unit, searches sender identification information that is received together with the incoming, and which detects whether identification information coincident with the outgoing history storage unit exists or not; and a notification control unit which, in a case where coincident identification information is detected by the outgoing history detection unit, changes a notification pattern in the notification unit.

Namely, information indicating whether there is a record of an outgoing from the own terminal to the outside or not is stored, and when an incoming is received from the stored counterparty, notification and a display for identifying the counterparty, or a special process are performed by a method which is preferential over an incoming from any party in which there is no outgoing record.

When an incoming is received from a party in which there is a past outgoing record, therefore, the user can analogize the counterparty by the past communication record, with the record that it is possible to easily make a determination whether the incoming requires an immediate response or has no problem even when a response is lately performed.

Even when there is a past outgoing record, the necessity of performing the preferential process is changed depending on conditions such as the elapse of the time, movement of the position where the user resides, and an incoming from the pertinent party or its alternative party.

In order to deal with such condition changes, in addition to the above configuration, the communication device of the invention includes an outgoing history analysis unit which determines validity of a registered record while additionally considering a status change that occurs after the registration of the record.

The invention provides a control program which causes procedures of managing the incoming/outgoing record and searching a record when an incoming is received from an outside, to be performed.

### Advantageous Effects of Invention

According to the invention, it is possible to provide a method of providing information for, even when the user does not previously register information that can identify the counterparty, such as a telephone number or a mail address, determining the response priority with respect to an incoming from a counterparty in which there is an outgoing record, and a control program for providing information.

The invention is mainly directed to the case where personal information for identifying the counterparty is not registered in the own terminal. Even in the case where information of the counterparty is registered, however, the logic of "the priority of an incoming which, immediately after the own terminal makes an outgoing, is received from the corresponding counterparty is high" is the same. The effect of the invention is not limited to existence or nonexistence of registration of information of the counterparty, and the invention is effective in providing a communication terminal and process method in which an incoming from the outside is received and notified, and a control program for providing information.

### Brief Description of Drawings

Fig. 1 is a block diagram showing the configuration of a main portion of a portable communication terminal according to an embodiment of the invention.
Fig. 2 is a sequence diagram showing main operations in the portable communication terminal according to a first embodiment.
Fig. 3 shows a specific example of a terminal display screen in the case where the portable communication terminal of the first embodiment receives an incoming from a communication counterparty in which there is a past outgoing record.
Fig. 4 is a block diagram showing the configuration of a main portion of a portable communication terminal according to a second embodiment.
Fig. 5 is a sequence diagram showing main operations in the portable communication terminal of the second embodiment.
Fig. 6 is a block diagram showing specific means for notifying and displaying information.
Fig. 7 shows a list of specific examples where a notification and display in which the priority is distinguished are performed in an incoming, in the second embodiment.
Fig. 8 is a schematic view showing a specific example related to a notification and a display "in the case where a plurality of" criteria for determining the priority due to the number of outgoings are set in the second embodiment.
Fig. 9 is a schematic view showing a specific example of a determination operation procedure "in the case where the calling time period is set" as the criterion for determining the priority in the second embodiment.
Fig. 10 is a schematic view showing a specific example of the determination operation procedure "in the case where the outgoing time is set" as the criterion for determining the priority in the second embodiment.
Fig. 11 is a schematic view showing a specific example of the determination operation procedure "in the case where the elapsed time from an outgoing is set" as the criterion for determining the priority in the second embodiment.
Fig. 12 is a schematic view showing a specific example of the determination operation procedure "in the case where the traveling distance from the position where an outgoing is made" as the criterion for determining the priority in the second embodiment.
Fig. 13 is a schematic view showing a specific example of the determination operation procedure "in the case where existence or nonexistence of a response of a counterparty in an outgoing is set" as the criterion for determining the priority in the second embodiment.
Fig. 14 is a schematic view showing a specific example of the determination operation procedure "in the case where a combination of a plurality of criteria is set" as the criterion for determining the priority in the second embodiment.
Fig. 15 is a sequence diagram showing the determination operation "in the case where a combination of a plurality of criteria is set" as the criterion for determining the priority in the second embodiment.
Fig. 16 is a sequence diagram showing the operation procedure in the case where the criterion of preference determination "is designated by an operation of the user itself" when an outgoing is made in the second embodiment.
Fig. 17 is a schematic view showing a specific example related to a screen display in the case where the criterion of preference determination "is designated by an operation of the user itself" when an outgoing is made in the second embodiment.
Fig. 18 is a schematic view showing a specific example related to a screen display in the case where the criterion of preference determination "is designated by an operation of the user itself" when an outgoing is made in the second embodiment.
Fig. 19 is a block diagram showing the configuration of a main portion of a portable communication terminal according to a third embodiment.
Fig. 20 is a sequence diagram showing main operations in the portable communication terminal of the third embodiment.

### Description of Embodiments

A portable communication terminal according to embodiments is an electronic device which is incorporated into a network while a telephone number is used as an identifier of a communication counterparty, such as a portable telephone terminal, a fixed telephone terminal, or a facsimile apparatus, and which is assumed to be able to receive an incoming from any counterparty. In the portable communication terminal, when an incoming is received, the reception is notified to the user by means of a ring tone, light, or the like, and in the case where the identifier of the counterparty is notified, the telephone number and counterparty information associated with the telephone number are displayed on a display screen of the device, thereby enabling to know who is the counterparty, before the response.

In the following embodiments, as an example of information provision which is provided by the portable communication terminal, and which is used for determining the priority in an incoming, a configuration example in which the invention is applied to a portable electronic device such as a portable telephone terminal is shown.

### (First embodiment)

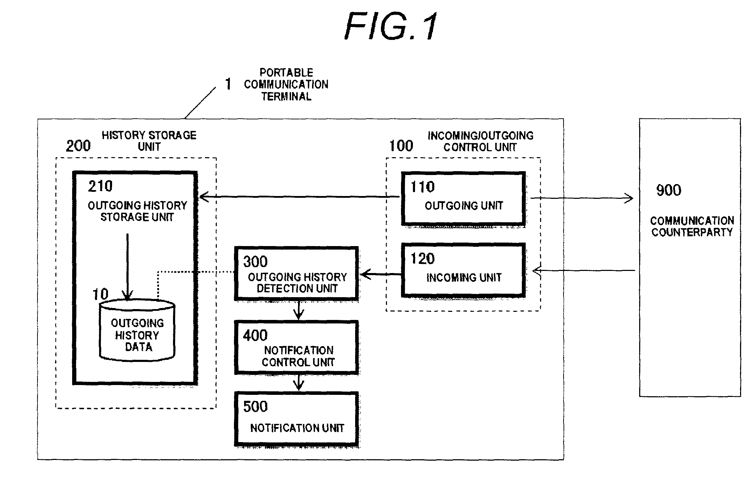

Fig. 1 is a block diagram showing the configuration of a main portion of a portable communication terminal according to an embodiment of the invention.

The portable communication terminal 1 shown in Fig. 1 includes an incoming/outgoing control unit 100 (an outgoing unit 110, an incoming unit 120), a history storage unit 200 (an outgoing history storage unit 210), an outgoing history detection unit 300, a notification control unit 400, and a notification unit 500. The terminal is configured together with outgoing history data 10 which accumulates data of the outgoing history, and a communication counterparty 900 which is the counterparty of communication with the portable communication terminal 1.

The incoming/outgoing control unit 100 is configured by the outgoing unit 110 and the incoming unit 120. When the portable communication terminal 1 makes an outgoing to the communication counterparty 900, the outgoing unit 110 performs the outgoing while designating information functioning as an identifier, such as the telephone number of the communication counterparty. The incoming unit 120 performs an incoming control on the incoming from the communication counterparty 900.

The history storage unit 200 is configured by including the outgoing history storage unit 210 as one of components. When the outgoing unit 110 performs the outgoing control, the outgoing history storage unit 210 registers an outgoing record in the outgoing history data 10, and manages the data in the form of a list. For example, information which is held when the outgoing history storage unit 210 registers the outgoing record corresponds to the telephone number which is used as the identifier of the communication counterparty 900, and items such as the time and place of the outgoing.

The outgoing history detection unit 300 searches whether the identifier of the communication counterparty 900 is contained in the outgoing history data 10 or not. When the incoming unit 120 receives the incoming from the communication counterparty 900, specifically, a searching operation is conducted on the outgoing history data 10 while using the identifier of the communication counterparty 900 as a search key, to confirm whether a corresponding record exists or not.

Based on a result of the search performed by the outgoing history detection unit 300, the notification control unit 400 instructs the notification unit 500 to notify the user of "incoming" and "information related to the counterparty" by a preset method. On this occasion, in the case where the identifier coincident with the communication counterparty 900 is confirmed in the search, the level of a notification sound is raised as compared with the case where the identifier is not confirmed, or contents of "counterparty to which an outgoing was made X minutes ago" are displayed on a display screen of the portable communication terminal 1.

The notification unit 500 is a portion corresponding to specific means for notifying and displaying information to the user. Specifically, a sound output speaker, light emitting LED, and vibration motor which are used for notifying an incoming, a display screen which displays information related to the communication counterparty 900, and the like correspond to the means.

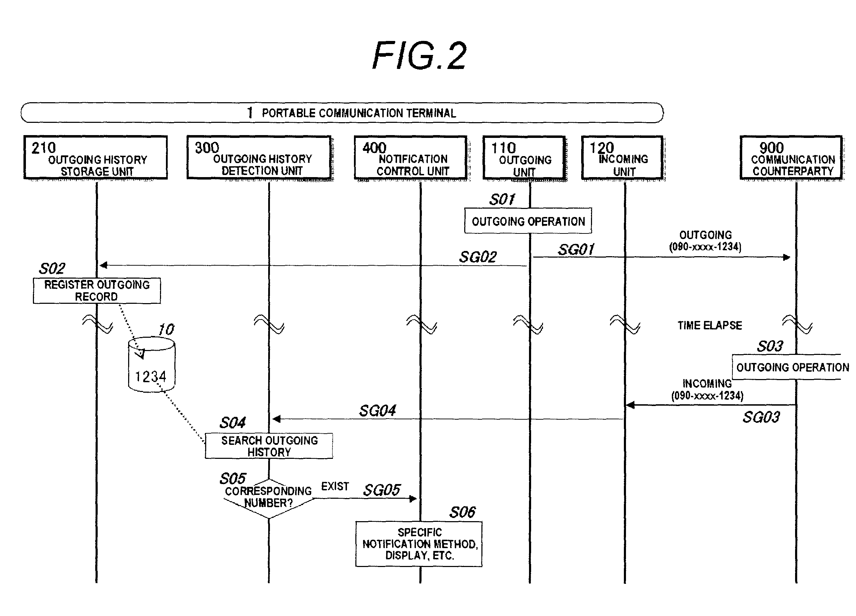

Fig. 2 is a sequence diagram showing main operations in the portable communication terminal of the first embodiment. A specific example of the notification method in an incoming in the portable communication terminal of the first embodiment will be described with reference to Fig. 2. In this example, in step S01, the portable communication terminal 1 first performs an outgoing operation on the communication counterparty 900 (the telephone number which functions as an identifier is 090-xxxx-1234), and its control signal SG01 is transmitted to the communication counterparty 900, and also to the outgoing history storage unit 210 in the own terminal as a control signal SG02. In step S02, the outgoing history storage unit 210 which receives the control signal stores a record of "the portable communication terminal 1 made an outgoing to the communication counterparty 900" in the outgoing history data 10. On this occasion, in addition to information of the time of day when the outgoing has been made, and the telephone number of the communication counterparty 900, also additional information indicating whether the outgoing made by the portable communication terminal 1 is responded by the communication counterparty 900 or not may be stored.

The case where, after a short period has elapsed from the completion of a series of operations related to the outgoing from the portable communication terminal 1, an operation of an outgoing to the portable communication terminal 1 is performed in step S03 by the communication counterparty 900 is shown. A control signal SG03 transmitted by the communication counterparty 900 is notified together with the telephone number (090-xxxx-1234) of the communication counterparty 900, to the portable communication terminal 1, and then received by the incoming unit 120. The incoming unit 120 which receives the control signal SG03 inquires the outgoing history detection unit 300 whether there is a record of an outgoing or not, by using a control signal SG04, and in step S04 searches the outgoing history. In the case where the telephone number corresponding to the communication counterparty 900 is confirmed in the outgoing history data 10 as a result of the search, a control signal SG05 is notified in step S05 together with related information such as the outgoing time of day to the notification control unit 400. In step S06, the notification control unit 400 instructs the notification unit 500 to notify the user under specific notification conditions, and the notification unit 500 performs the operations of notifying and displaying under designated conditions. As a result of the series of operations, after knowing that the incoming is made by a counterparty to which the user itself made an outgoing, the user can select an operation with respect to the response. In Fig. 2, the description related to the notification unit 500 is omitted.

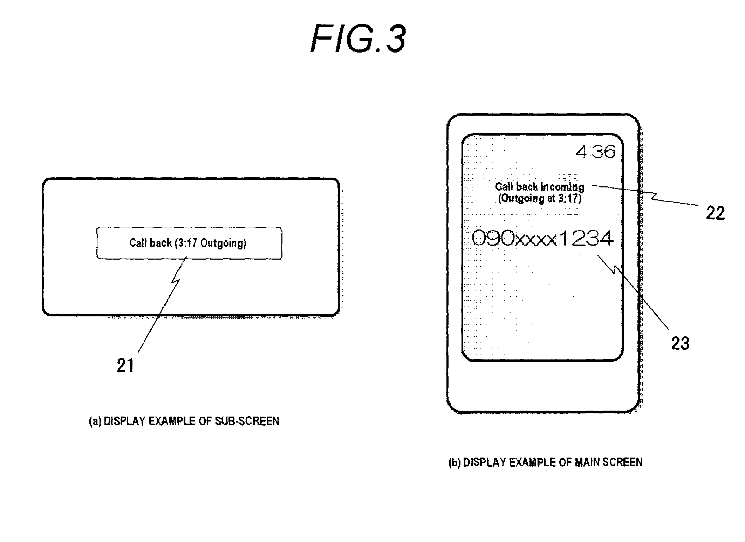

Fig. 3 shows a specific example of a terminal display screen in the case where the portable communication terminal 1 of the first embodiment receives an incoming from a communication counterparty in which there is a past outgoing record. Fig. 3 shows (a) a display example of a sub-screen, and (b) a display example of a main screen. In this example, information 21 indicating that the incoming is a call from a counterparty in which there is a record of a past outgoing from the own terminal (Call Back), and that the time of day (3:17) when the outgoing is made by oneself is displayed on the sub-screen (in the embodiment, on a liquid crystal screen) which is placed on the rear surface of the main screen, or the like. In the main screen, in addition to information 22 related to the past outgoing, also information 23 related to the telephone number of the communication counterparty 900 is displayed.

### (Second embodiment)

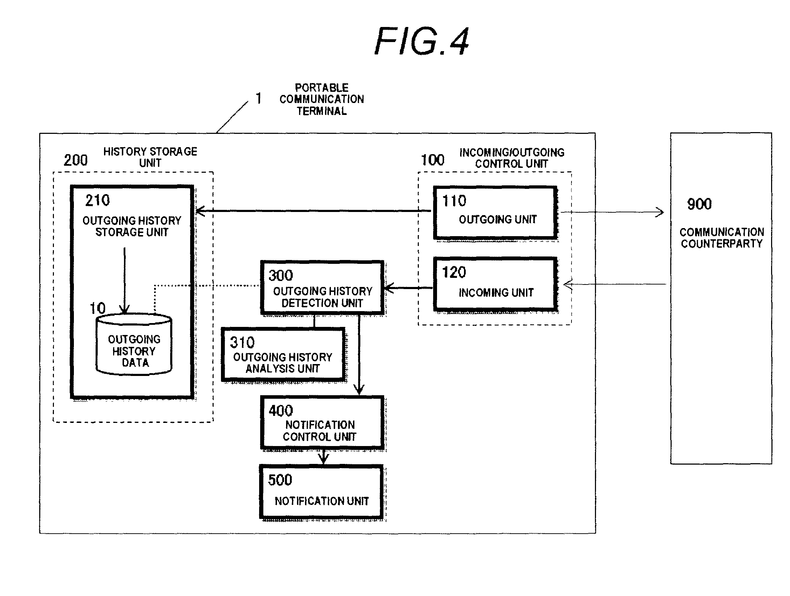

Fig. 4 is a block diagram showing the configuration of a main portion of a portable communication terminal according to a second embodiment.

In Fig. 4, in addition to the configuration of the first embodiment (Fig. 1), an outgoing history analysis unit 310 is added. The unit analyzes the information related to an out going, which is stored in the outgoing history data 10, and changes the method of notifying to the user in accordance with the conditions.

As a specific example of analysis in the outgoing history analysis unit 310, for example, "number of outgoings" is considered. After the outgoing history detection unit 300 confirms a past outgoing record when receiving an incoming from the communication counterparty 900, the outgoing history analysis unit 310 counts the number of records of the outgoing history which is managed in the outgoing history data 10, and which is directed to the communication counterparty 900, thereby knowing the number of outgoings to the communication counterparty 900. If it is confirmed that the number of outgoings is equal to or larger than a stipulated value (for example, three or more), the notification control unit 400 changes the notification method.

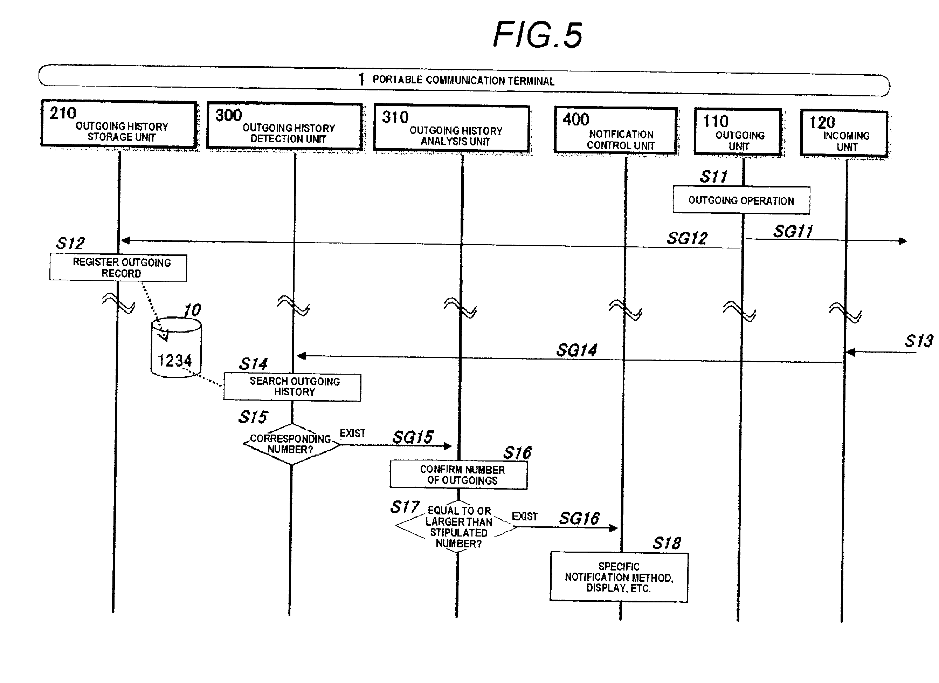

Fig. 5 is a sequence diagram showing main operations in the portable communication terminal of the second embodiment. A specific example of the notification method in an incoming in the portable communication terminal of the second embodiment will be described with reference to Fig. 5. In Fig. 5, only portions of the own terminal (the portable communication terminal 1) in the sequence diagram of Fig. 2 in the first embodiment are shown, and the series of processes from the incoming from the communication counterparty 900 to the search of the outgoing history data 10 by the outgoing history detection unit 300 are identical. Namely, the outgoing unit 110 of the portable communication terminal 1 performs an outgoing operation in step S11, and notifies of control signals (SG11, SG12), and then the outgoing record is stored in the outgoing history data 10 as a record of the outgoing record (step S12), by the outgoing history storage unit 210. After a short period has elapsed therefrom, in step S13, the incoming unit 120 receives the incoming from the communication counterparty 900, and the search of an outgoing record is performed on the outgoing history detection unit 300 by using a control signal SG14 (step S14).

In the second embodiment, information related to the outgoing record with respect to the communication counterparty 900 is notified by a control signal SG15 to the outgoing history analysis unit 310. Namely, the number of outgoings to the communication counterparty 900 is notified, and it is confirmed in step S16 whether the number of outgoings exceeds a preset stipulated number or not. If the number exceeds the stipulated number, it is notified in step S17 by a control signal SG16 so that the notification control unit 400 performs notification by a specific notification method. Fig. 5 shows the sequence in which the outgoing history detection unit 300 delivers information related to the history of an outgoing to the communication counterparty 900, to the outgoing history analysis unit 310. Alternatively, a similar process may be executed by causing the outgoing history analysis unit 310 to directly confirm the outgoing history data 10.

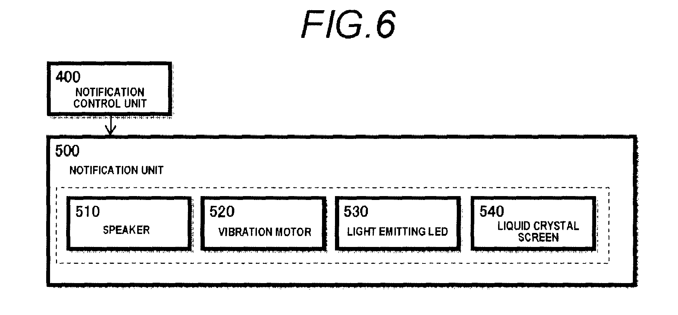

Fig. 6 is a block diagram showing a specific example in the case where the notification unit 500 actually performs notification in the above-described first and second embodiments. Here, as means for notifying and displaying notification of an incoming and information related to the communication counterparty, a speaker 510, a vibration motor 520, a light emitting LED 520, and a liquid crystal screen 540 are shown. The liquid crystal screen includes both a back surface liquid crystal and main liquid crystal which are usually placed in a portable telephone, or may be alternative other means as far as it is means which can attain equivalent objects (namely, notification and display of information). In accordance with instructions from the notification control unit 400, the notification unit 500 notifies and displays information by using one or more of these specific means.

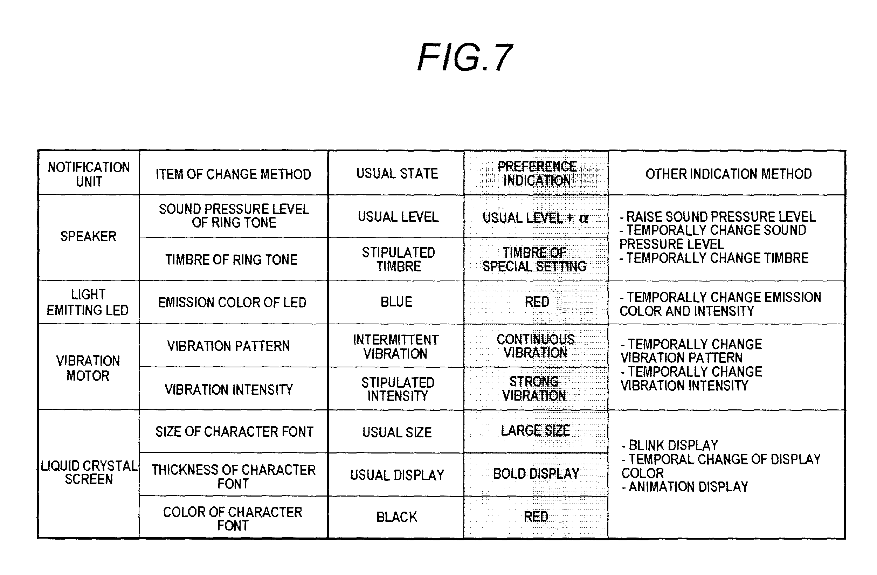

Fig. 7 shows specific examples in the case where notification and display methods of an incoming the priority which is determined to be high by the notification control unit 400 are changed. In the examples, the sound pressure level and timbre of the ring tone which are notified from the speaker, the emission color of the light emitting LED, the vibration pattern and intensity of the vibration motor, and the font size, thickness, and color of the display of information of the incoming party are shown in cases of a usual incoming and an incoming of a higher priority. In a notification and a display are to be performed, when one or more of these items are changed, the user can easily know that an incoming of a higher priority is received.

In the case where a speaker is used as the notification unit 500, as the method of selectively sounding in different manners in accordance with the priority of an incoming, methods such as (1) the pressure sound level is raised or lowered, (2) the pressure sound level is temporally changed, (3) differentiation is made by the timbre or the melody, and (4) the timbre is temporally changed may be employed.

In the case where a light emitting LED indicating an incoming is used as the notification unit 500, as the method of performing differentiation in accordance with the priority of an incoming, methods such as (1) the emission color is differentiated, (2) the emission color is temporally changed, (3) the light emission is blinked, and (4) the light emission blinking rate is temporally changed may be employed.

In the case where a vibration motor is used as the notification unit 500, as the method of performing differentiation in accordance with the priority of an incoming, methods such as (1) the vibration intensity is differentiated, (2) the vibration pattern is temporally changed, and (3) the vibration intensity is temporally changed may be employed.

In the case where a displaying unit such as a liquid crystal display is used as the notification unit 500, as the method of performing differentiation in accordance with the priority of an incoming, methods such as (1) the font size of display characters is differentiated, (2) ornamental characters such as bold display or italic display are applied to the fonts of display characters, (3) differentiation is made by the colors of display characters, (4) a blink or animation effect of display characters is applied, and (5) the colors of display characters are temporally changed may be employed.

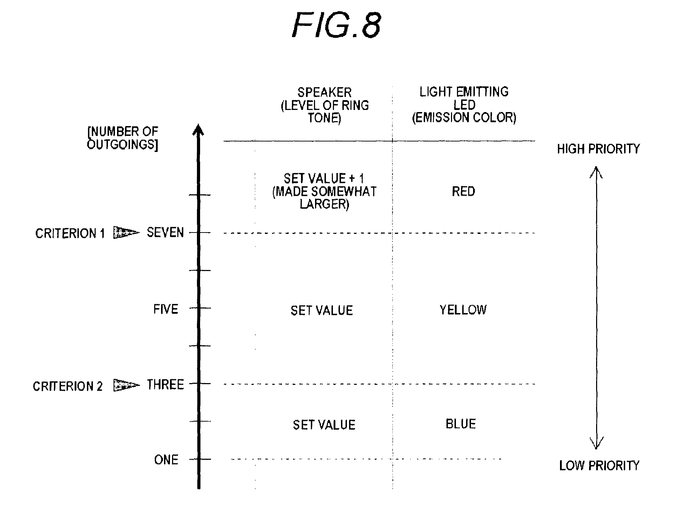

Fig. 8 shows an example in the case where a plurality of criteria for the number of outgoings which is determined in step S17 of the second embodiment are set, and notification and display methods are set for each of the criteria. In the case where the number of outgoings is set as an item of evaluation, for example, it may be contemplated that the counterparty is an important party depending on a larger number, and operation conditions for the user to further cause a response are set. In the example of Fig. 8, the ring tone level (the level of the sound pressure) and the emission color of the light emitting LED are shown as objects of the change of the notification method, and an incoming of a higher priority is expressed by causing the ring tone to be sounded in a larger level, and the light emitting LED to emit yellow light instead of blue light, and red light instead of yellow light.

In step S17 of Fig. 5 in the second embodiment, "number of outgoings" which functions as the determination criterion may be replaced with "calling time period". In the case where the urgency is high, usually, an outgoing tends to be continued even when the counterparty does not respond. In the case where the ringing of the calling tone is continued for a long time in an outgoing to the communication counterparty 900, therefore, it is determined in the process of step S17 that the importance is high.

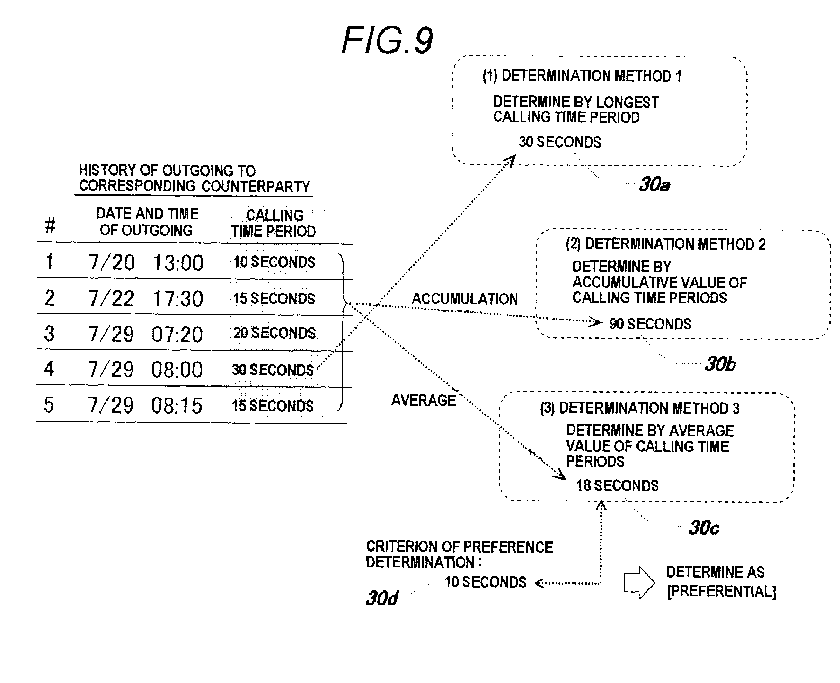

Fig. 9 is a schematic view showing a specific example in the case where "the calling time period" is set as the determination criterion. The example shows the case where five outgoing histories with respect to the communication counterparty 900 exist. As the determination procedure, for example, cases such as (1) the determination is performed based on the longest calling time period, (2) the determination is performed based on the accumulative value of calling time periods, and (3) the determination is performed based on the average value of calling time periods may be used. As a specific determining operation, in the case of (3), the average value is calculated as 18 seconds (30c). This value is compared with a threshold of 10 seconds (30d) which functions as the criterion of preference determination. In the case of Fig. 8, the average value of 18 seconds is longer than the reference value of 10 seconds, and hence the incoming is determined as an incoming of a preference object.

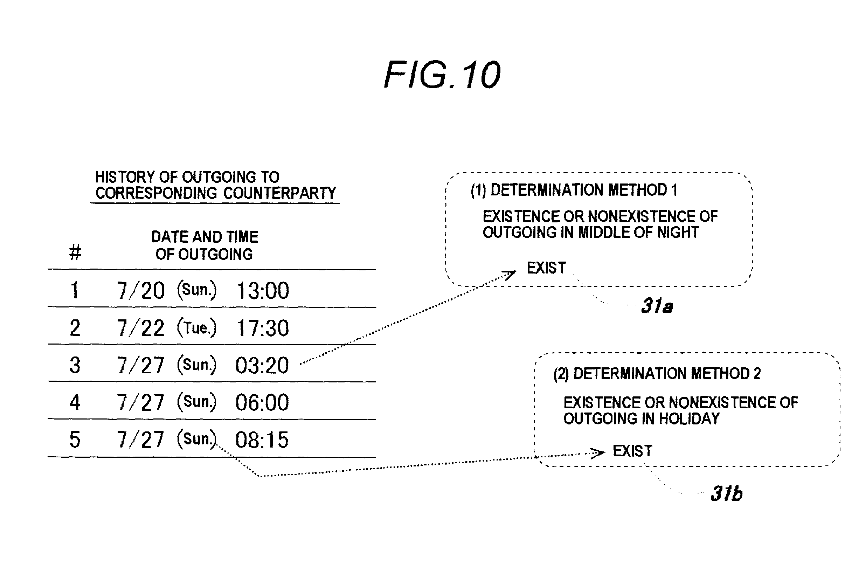

In step S17 of Fig. 5 in the second embodiment, "number of outgoings" which functions as the determination criterion may be replaced with "outgoing time of day". In the case of communication in which the urgency is high, usually, an outgoing is made irrespective of conditions such as day and night or a holiday. The importance of the counterparty is determined in accordance with the time of day when an outgoing is made with respect to the communication counterparty 900, and the result is used in the process of step S17. Fig. 10 is a schematic view showing a specific example in the case where the outgoing time of day is set as the determination criterion. The example shows the case where five outgoing histories with respect to the communication counterparty 900 exist. As the determination method, for example, methods such as (1) whether an outgoing in the middle of the night exists or not, and (2) whether an outgoing in a holiday exists or not may be used. As a specific determination procedure, in the case of (1), "existence" (31a) of an outgoing in the middle of the night is recorded. Based on the conditions, it is determined that the incoming from the communication counterparty 900 has a higher priority.

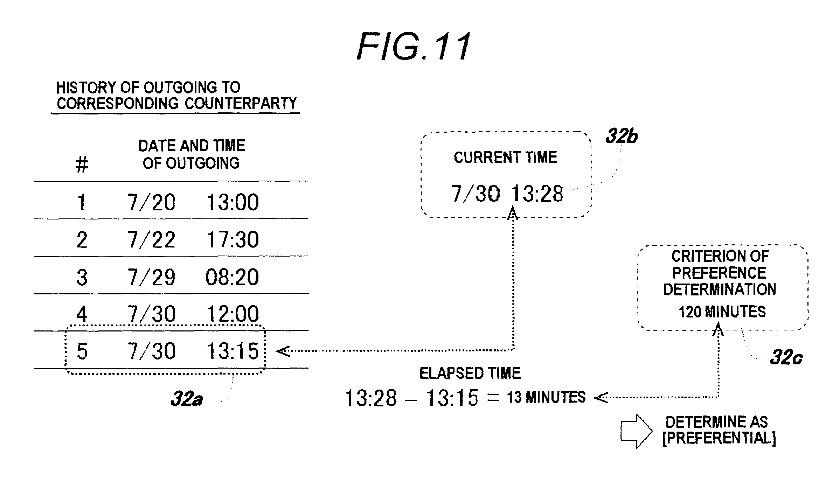

In step S17 of Fig. 5 in the second embodiment, "number of outgoings" which functions as the determination criterion may be replaced with "elapsed time from an outgoing". In the case where, immediately after the own terminal makes an outgoing, an incoming from the counterparty is received, it seems that the importance of the incoming is high. By contrast, in the case where, although there is a record in which the own terminal made an outgoing, one week has elapsed from the outgoing, there is a high possibility that the importance is lower as compared with the former case. The importance of the counterparty is determined in accordance with the time period elapsed from the time when an outgoing was made for the communication counterparty 900, and the result is used in the process of step S17. Fig. 11 is a schematic view showing a specific example in the case where "elapsed time from an outgoing" is set as the determination criterion. The example shows the case where five outgoing histories with respect to the communication counterparty 900 exist, and the latest outgoing is made at 7/30 13:15 (32a). In the case where the current time is 7/30 13:28 (32b), and the preference determination criterion for determining that the counterparty is important is set to 120 minutes (32c), the elapsed time is 13 minutes, and has a value which is smaller than that of the preference determination criterion. In the case where an incoming is received from the communication counterparty 900 at this timing, therefore, it is determined that the priority is high.

When, after an outgoing history is recorded (32a), an incoming is received from the communication counterparty 900, the date and time of the outgoing recorded in 32a may be replaced with those of the incoming. Alternatively, information of an incoming from the outside may be recorded aside from the outgoing history data 10, and when an incoming is received from the outside, the information may be used in the priority determination. When these processes are applied, a state where, after the portable communication terminal 1 makes an outgoing to the communication counterparty 900, an incoming from the corresponding counterparty is received can be deemed as that the conversation with the communication counterparty 900 is continued, and the priority in an incoming can be again enhanced.

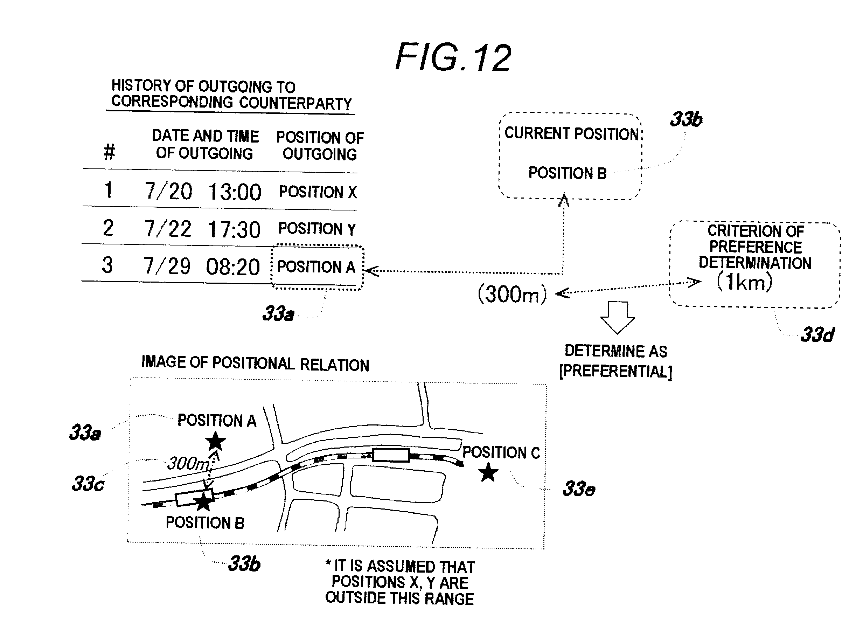

In step S17 of Fig. 5 in the second embodiment, "number of outgoings" which functions as the determination criterion may be replaced with "traveling distance from the position where an outgoing is made". For example, there is a case where, when visiting to the area where a friend (the communication counterparty 900) lives, an outgoing is made in order to meet the friend because there is incidentally enough time. On this occasion, the case where the counterparty does not respond and an incoming is received a little later is assumed. In this case, an incoming from the corresponding counterparty has a higher priority under conditions that the owner stays in the area. When the owner is removed from the area, however, the priority is lowered. Fig. 12 is a schematic view showing a specific example in the case where "traveling distance from the position where an outgoing is made" is set as the determination criterion. The example shows the case where three outgoing histories with respect to the communication counterparty 900 exist, and the latest outgoing is made at 7/29 08:20 and in "position A (33a)". It is assumed that, when the incoming from the communication counterparty 900 is received in "position B (33b)" where is the current position, the distance between positions A and B is 300 m (33c). The own terminal exists in a distance which is shorter than 1 km (33d) that functions as the preference determination criterion. Therefore, it is determined that the incoming from the communication counterparty 900 has a higher priority. By contrast, in the case where, when the incoming from the communication counterparty 900 is received, the position where the reception is made is "position C (33e)", it is determined that the own terminal has been already considerably separated from the corresponding area, and the necessity to respond at the reception timing is low.

In the case where "traveling distance from the position where an outgoing is made" is set as the conditions of the determination criterion, a GPS or an acceleration sensor may be contemplated as a candidate of a method of sensing movement of the portable communication terminal. In the application, however, the method of sensing movement is not limited as far as it is possible to know that the portable communication terminal moves from the corresponding area, by using a movement sensing unit corresponding to the above-described unit.

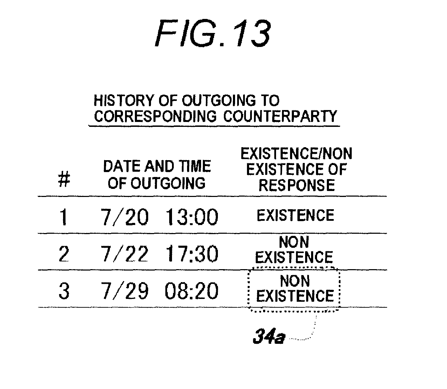

In step S17 of Fig. 5 in the second embodiment, "number of outgoings" which functions as the determination criterion may be replaced with "existence or nonexistence of a response of a counterparty in an outgoing". In the case where, when the outgoing is made by oneself, the counterparty does not respond, when an incoming is received from the corresponding counterparty, it is contemplated that its importance is high. Fig. 13 is a schematic view showing a specific example in the case where "existence or nonexistence of a response of a counterparty in an outgoing" is set as the determination criterion. The example shows the case where, when the outgoing is made to the communication counterparty 900, the counterparty does not respond (34a). In the case where an incoming from the communication counterparty 900 is received under this state, it is determined that the priority is high. In the case where an outgoing from oneself is not responded but an incoming from the communication counterparty 900 is thereafter received, the determination conditions may be revised based on the record.

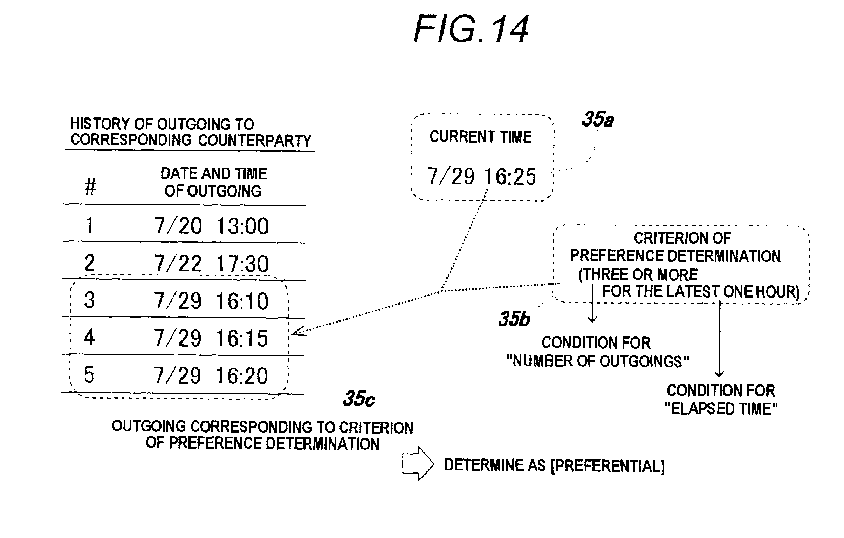

In step S17 of Fig. 5 in the second embodiment, "number of outgoings" which functions as the determination criterion may be determined in accordance with a combination of the various above-described conditions. For example, a combination of "number of outgoings" and "elapsed time from an outgoing" may be considered. Fig. 14 is a schematic view showing a specific example in the case where "number of outgoings" and "elapsed time from an outgoing" are set as the determination criterion. The example shows the case where "three or more for the latest one hour" (35b) is set as the preference determination criterion, and the current time is 7/29 16:25 (35a). The corresponding time slot under the conditions is from 7/29 15:25 to 16:25, and three outgoings of #3 to #5 (35c) correspond to the conditions and satisfy the determination criterion.

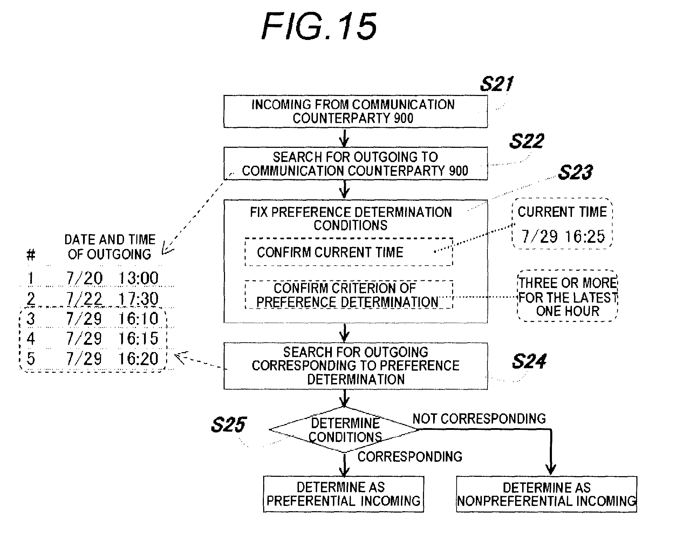

Fig. 15 is a sequence diagram showing the operation in the case where the combination of "number of outgoings" and "elapsed time from an outgoing" is set as the determination criterion. When an incoming (step S21) is received from the communication counterparty 900, the portable communication terminal performs in step S22 a search whether there is a record of an outgoing to the corresponding counterparty (in this case, the communication counterparty 900) or not. If there is a corresponding outgoing, conditions corresponding to the preference determination criterion are fixed in step S23. In this example, determination conditions are fixed from two conditions of "three or more for the latest one hour" and "current time 7/29 16:25". (Specifically, there are three or more outgoings during from 7/29 15:25 to 16:25.) In step S24, next, an outgoing history corresponding to the determination conditions which are fixed in step S23 is searched. In the case shown in Fig. 15, three histories correspond, and "corresponding" is determined in the condition determination of step S25.

The cases which are shown in Figs. 14 and 15, and in which the combination of "number of outgoings" and "elapsed time from an outgoing" is set as the determination criterion are one example of determination of a state where a contact attempt is frequently performed immediate before an incoming is received from the communication counterparty 900. In this state, when an incoming is received from the corresponding counterparty, the user is notified by adequate notification and display methods, whereby sure response is enabled without requiring wasteful operations.

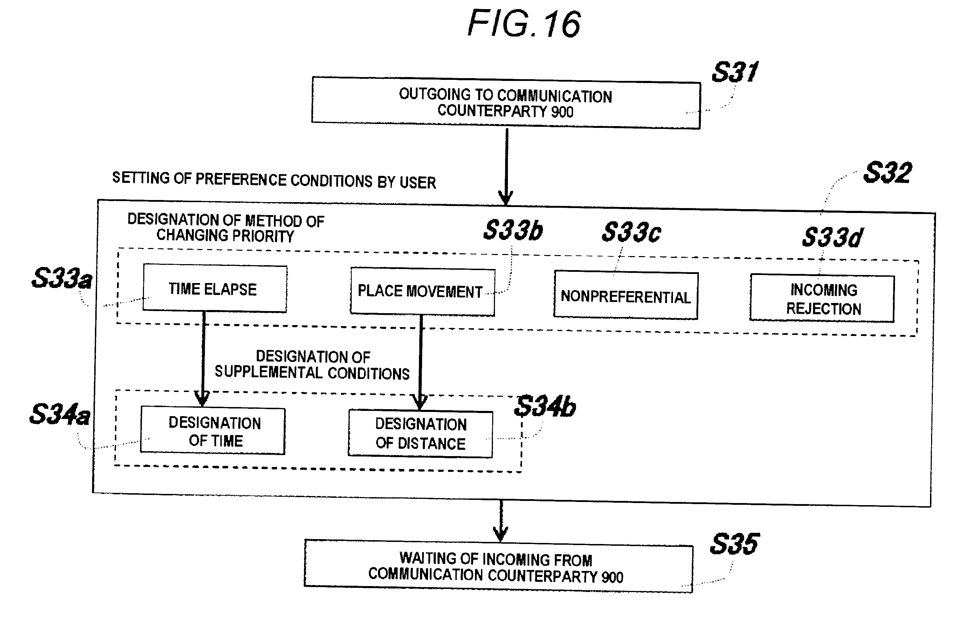

Fig. 16 shows an example in which, when an outgoing is made to the communication counterparty 900, the preference provision in the case where an incoming is then received from the communication counterparty 900 is designated by an operation of the user itself. After an outgoing is made in step S31 to the communication counterparty 900, the preference conditions are designated in step S32 by a user operation. As a specific example of the case where the preference conditions are designated, for example, a higher priority is placed on "time elapse" (step S33a), a higher priority is placed on "place movement" (step S33b), the priority is not designated (step S33c), or "incoming rejection" is performed (step S33d) is employed. In the case where "time elapse" or "place movement" is designated among them, also setting of "designation of a time which functions as a threshold of the time elapse" (step S34a) and "traveling distance which functions as a threshold of the place movement" (step S34b) is enabled. (Predetermined values which are previously set may be used.)

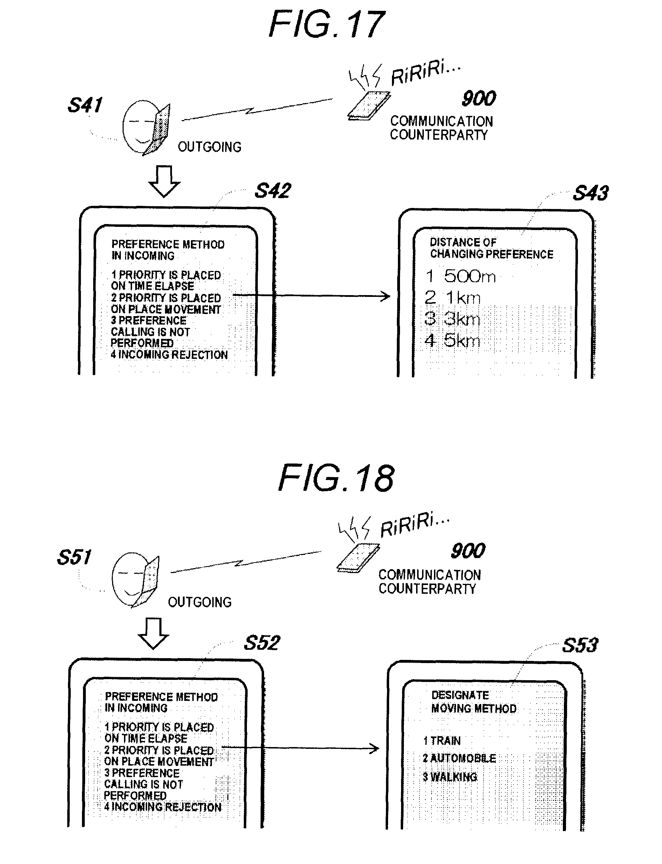

Fig. 17 is a schematic view showing an operation screen image for designating the preference method in the case where, after an outgoing is made to the communication counterparty 900, an incoming is received from the communication counterparty 900. After an outgoing is made in step S41, options for selecting the preference method in an incoming are displayed on the screen of the portable communication terminal (step S42). Fig. 17 shows a display example in the case where "priority is placed on place movement" is selected in step S42. The items which are displayed in step S43 show conditions of the traveling distance for changing the preference conditions when place movement is conducted. Here, an operation method in which options of "500 m", "1 km", "3 km", and "5 km" are displayed and selected is employed. Alternatively, an operation method in which the distance is directly input by using a numeric keypad may be employed.

When the conditions of the traveling distance for changing the preference conditions are to be set in Fig. 17, the designation may be indirectly performed by designating moving means. Fig. 18 shows a specific example of the designation. After the preference method in an incoming is set in step S52 as "priority is placed on place movement", the items which are displayed in step S53 are candidates of the moving means in the movement, and, in the example of Fig. 18, "train", "automobile", and "walking" are shown. In the case of "train", for example, it is supposed that the priority is lowered at the timing when movement by a train is started. This is because, even when an incoming is received from the target communication counterparty 900 after taking a train, the possibility that a person bothers to come back is seemed to be low. By contrast, in the case of "automobile", it is supposed that an automobile travels around the neighborhood in order to kill time. Even when the automobile is separated from the corresponding area, the possibility that it returns to the original area is high. Therefore, the determination is made while a state where an automobile is separated by 5 km or longer is set as the conditions for lowering the priority.

### (Third embodiment)

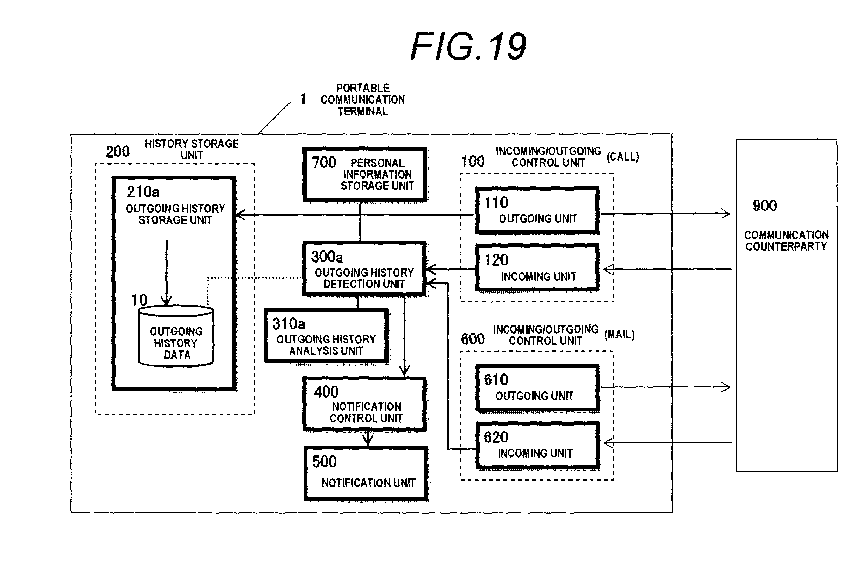

Fig. 19 is a block diagram showing the configuration of a main portion of a portable communication terminal according to a third embodiment.

In Fig. 19, the incoming/outgoing control unit 100 in the configuration of the block diagram (Fig. 1 or 4) of the first or second embodiment is classified into a calling unit (an incoming/outgoing control unit (call) 100) and a mailing unit (an incoming/outgoing control unit (mail) 600), and, in order to clarify that a function relating to a mail is added, the outgoing history detection unit 300 and the outgoing history analysis unit 310 are expressed as an outgoing history detection unit 310a and an outgoing history analysis unit 310a, respectively. Furthermore, a personal information storage unit 700 is added as a unit which manages personal information such as the telephone number and mail address of the communication counterparty.

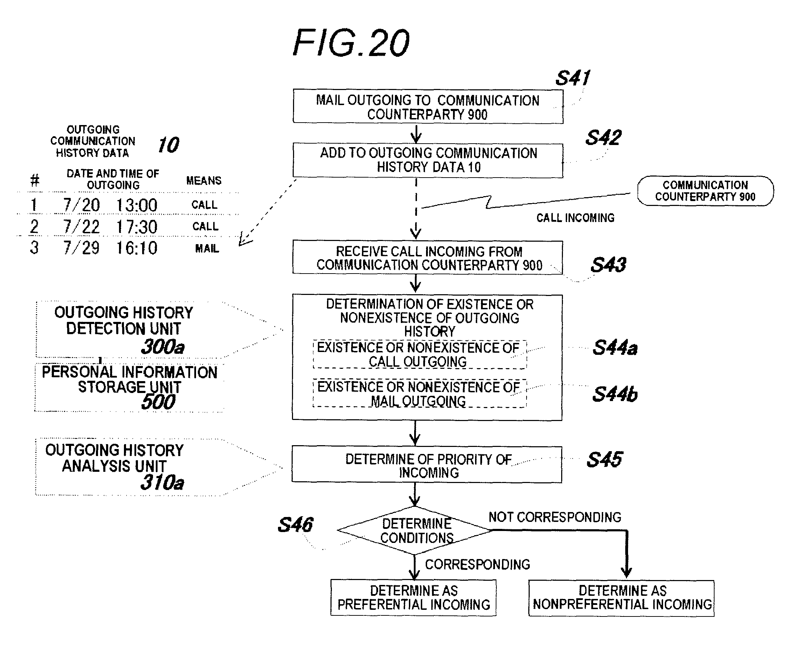

Fig. 20 is a sequence diagram showing main operations in the portable communication terminal of the third embodiment. In the third embodiment, a call outgoing and a mail outgoing are handled in the same manner. This example shows the case where a mail outgoing to the communication counterparty 900 is first handled in step S41. As a result of the mail outgoing, an outgoing record is added to the outgoing history data 10 (step S42). As the data which are to be added to the outgoing history data 10, the mail address itself may be recorded. Alternatively, a method may be employed in which it is searched whether corresponding information exists in the personal information storage unit 700 or not, and, if coincident information exists, the corresponding telephone number is recorded as key information of the search together with attribute information indicative of "mail outgoing".

In the case where, after a mail outgoing is performed, a call incoming is received from the communication counterparty 900 (step S43), the outgoing history detection unit 300a executes a confirmation of existence or nonexistence of a call outgoing (step S44a) and that of existence or nonexistence of a mail outgoing (step S44b), as the determination of existence or nonexistence of an outgoing history. On this occasion, in order to identify the mail address corresponding to the counterparty which receives the incoming, an inquiry to the personal information storage unit 700 is executed in the series of processes. (In the case where, when registration is to be performed on the outgoing communication history data 10, the registration is performed while replaced with a telephone number, the inquiry to the personal information storage unit 700 at this timing is unnecessary.)
After the determination of existence or nonexistence of an outgoing history, the outgoing history analysis unit 310a determines the priority of the incoming in step S45. Here, the priority determination criterion is equivalent to that of the first or second embodiment, and the determination is performed under preset conditions such as a time elapse or place movement.

In the above description, "coincidence" is set as conditions in the search of the outgoing history detection unit 300 or 300a. Alternatively, in the case where complete coincidence is not attained, an equivalent process may be performed. This is assumed to correspond to a case such as that where consecutive telephone numbers are contracted in a company organization or the like. A flexible operation is enabled in which, also when an incoming is received from a telephone line in which only the last digit is different from the outgoing telephone number, the incoming is handled as a high priority incoming.

The invention is not limited to the matters described in the embodiments. In the invention, it is expected that those skilled in the art will change or apply the matters based on the description in the description and the well-known technique, and such a change or application is included in the range to be protected.

In the above-described embodiments, as the notification control unit 400, the unit which notifies a ring tone (for example, a speaker), that which generates vibration due to vibration (for example, a vibration motor), that which notifies light emission indicating an incoming (for example, a light emitting LED), and that which notifies an incoming and information of the counterparty by means of display (for example, a back surface liquid crystal and a main liquid crystal) are assumed. A method other than the above may be employed as far as it has a function of notifying an incoming from a communication counterparty or displaying information identifying the communication counterparty. For example, a special flavor is produced in an incoming, and notification can be performed while the incoming priority is changed by changing the flavor.

The portable communication terminals of the embodiments may be configured as an integrated type terminal such as a portable telephone, and the series of processes can be configured by separating the process related to an incoming and outgoing communication with the outside from that of managing and analyzing the outgoing record.

Although the invention has been described in detail and with reference to the specific embodiments, it is obvious to those skilled in the art that various changes and modifications can be made without departing from the spirit and scope of the invention.
This application is based on Japanese Patent Application No. 2008-230780 filed on September 9, 2008, and its disclosure is incorporated herein by reference.

### Industrial Applicability

The invention has effects that it can be applied to various situations where a portable communication terminal which receives an incoming from any counterparty receives an incoming, and that, even in a situation where the user cannot react to an unimportant matter, the user can surely respond to a high priority incoming, and is useful in, for example, a portable telephone terminal, a portable information terminal (PDA) which has a communicating function, a portable communication terminal which has a function of communicating with the outside irrespective wired or wireless, a notification method in an incoming, an incoming notification program, and the like.

### Reference Signs List

- 1: portable communication terminal
- 10: outgoing communication history data
- 100: incoming/outgoing control unit (call)
- 110: outgoing unit
- 120: incoming unit
- 200: history storage unit
- 210: outgoing history storage unit
- 300: outgoing history detection unit
- 310: outgoing history analysis unit
- 400: notification control unit
- 500: notification unit
- 510: speaker
- 520: vibration motor
- 530: light emitting LED
- 540: liquid crystal screen
- 600: incoming/outgoing control unit (e-mail)
- 610: outgoing unit
- 620: incoming unit
- 700: personal information storage unit
- 900: communication counterparty

## Claims

1. A communication terminal, comprising:
an outgoing unit which is configured to transmit a signal to an outside;
an incoming unit which is configured to receive a signal from the outside;
a notification unit which is configured to notify of reception of the signal;
an outgoing history storage unit in which an outgoing record is stored;
an outgoing history detection unit which is configured, in a case where an incoming is sensed by the incoming unit, to search sender identification information that is received together with the incoming, and to detect whether identification information coincident with the outgoing history storage unit exists or not; and
a notification control unit which is configured, in a case where coincident identification information is detected by the outgoing history detection unit, to change a notification pattern in the notification unit.

2. The communication terminal according to claim 1, further comprising an outgoing history analysis unit, wherein
in a case where the incoming is sensed by the incoming unit, the outgoing history detection unit detects whether corresponding sender identification information exists or not in the outgoing history storage unit, if detected,
the outgoing history analysis unit analyzes a number of outgoings stored in the outgoing history storage unit, and
the notification control unit changes the notification pattern in accordance with the number of outgoings.

3. The communication terminal according to claim 1, further comprising an outgoing history analysis unit, wherein
in a case where the incoming is sensed by the incoming unit, the outgoing history detection unit detects whether corresponding sender identification information exists or not in the outgoing history storage unit, if detected,
the outgoing history analysis unit analyzes a calling time period stored in the outgoing history storage unit, and
the notification control unit changes the notification pattern in accordance with a length of the calling time period.

4. The communication terminal according to claim 1, further comprising an outgoing history analysis unit, wherein
in a case where the incoming is sensed by the incoming unit, the outgoing history detection unit detects whether corresponding sender identification information exists or not in the outgoing history storage unit, if detected,
the outgoing history analysis unit analyzes a calling time of day stored in the outgoing history storage unit, and
the notification control unit changes the notification pattern in accordance with the calling time of day.

5. The communication terminal according to claim 1, further comprising an outgoing history analysis unit,
in a case where the incoming is sensed by the incoming unit, the outgoing history detection unit detects whether a serial number of the incoming exists or not in the outgoing history storage unit, if detected,
the outgoing history analysis unit analyzes a time elapse from a time of day stored in the storage unit, and
the notification control unit changes the notification pattern in accordance with the time elapse.

6. The communication terminal according to claim 1, further comprising:
a position detection unit; and
an outgoing history analysis unit, wherein
position information at a timing when a previous outgoing is made is also stored in the storage unit, and
the outgoing history analysis unit analyzes the previous position information stored in the storage unit and current position information, and the notification control unit changes the notification pattern, depending on a case where the difference is smaller than a preset criterion, and a case where the difference is larger than the preset criterion.

7. The communication terminal according to claim 1, further comprising an outgoing history analysis unit, wherein
whether a response is received from a counterparty at a timing of a previous outgoing or not is also stored in the storage unit, and the outgoing history analysis unit analyzes existence or nonexistence of a previous response stored in the storage unit, and
in a case where the incoming is received from a counterparty which have not responded previously, the notification control unit changes the notification pattern.

8. The communication terminal according to claim 1, further comprising an outgoing history analysis unit, wherein
in a case where an incoming is received from a counterparty after a previous outgoing is made to the counterparty, a record of the incoming is stored in the storage unit,
the outgoing history analysis unit analyzes existence or nonexistence of a previous response stored in the storage unit, and
in a case where the incoming is received from the counterparty from which, after the outgoing, the incoming is not received, the notification control unit changes the notification pattern.

9. The communication terminal according to claim 1, further comprising an outgoing history analysis unit, wherein
the outgoing history analysis unit analyzes whether, in outgoing histories stored in the storage unit, an incoming is received from a counterparty to which an outgoing is lastly made or not, and
in a case where coincidence with the incoming received from the counterparty to which the outgoing is lastly made is attained, the notification control unit changes the notification pattern.

10. A communication terminal, comprising:
an outgoing unit which is configured to transmit a signal to an outside;
an incoming unit which is configured to receive a signal from the outside;
a notification unit;
a personal information storage unit in which a telephone and mail address of a counterparty are stored correspondingly;
an outgoing history storage unit in which outgoing histories of a telephone and a mail are stored;
an outgoing history detection unit which is configured, in a case where a mail incoming is detected by the incoming unit, to search whether a mail address that is received together with the incoming exists in the personal information storage unit (an address book), and in a case where a coincident mail address exists, to detect whether a telephone number corresponding to the mail address exists in the outgoing history storage unit or not; and
a notification control unit which is configured, in a case where the outgoing history detection unit detects that the telephone number exists in the outgoing history storage unit, changes a notification pattern in the notification unit.

11. A communication terminal, comprising:
an outgoing unit which is configured to transmit a signal to an outside;
an incoming unit which is configured to receive a signal from the outside;
a notification unit;
a personal information storage unit in which a telephone and mail address of a counterparty are stored correspondingly;
an outgoing history storage unit in which outgoing histories of a telephone and a mail are stored;
an outgoing history detection unit which is configured, in a case where a telephone incoming is detected by the incoming unit, to detect whether a mail address corresponding to the incoming telephone number exists in the outgoing history storage unit or not; and
a notification control unit which is configured, in a case where the outgoing history detection unit detects that a coincident mail address exists, changes a notification pattern in the notification unit.

12. The communication terminal according to any one of claims 1 to 11, wherein
the notification unit is a speaker, and
a sound pressure level is changed by the notification control unit.

13. The communication terminal according to any one of claims 1 to 11, wherein
the notification unit is a speaker, and
a timbre is changed by the notification control unit.

14. The communication terminal according to any one of claims 1 to 11, wherein
the notification unit is a vibration motor, and
a vibration intensity is changed by the notification control unit.

15. The communication terminal according to any one of claims 1 to 11, wherein
the notification unit is a vibration motor, and
a vibration pattern is changed as means for changing a vibration method.

16. The communication terminal according to any one of claims 1 to 11, wherein
the notification unit is a light emitting LED, and
an emission color is changed as means for changing a light emission method.

17. The communication terminal according to any one of claims 1 to 11, wherein
the notification unit is a light emitting LED, and
a blinking interval is changed as means for changing a light emission method.

18. The communication terminal according to any one of claims 1 to 11, wherein
the notification unit is a light emitting LED, and
an emission intensity is changed as means for changing a light emission method.

19. The communication terminal according to any one of claims 1 to 11, wherein
the notification unit is a displaying unit, and
in a case where the sender identification information is detected in the outgoing history storage unit, the outgoing history detection unit displays also information indicative of the effect on the displaying unit.

20. An incoming communication notification method, comprising:
an outgoing history storing step of storing a record of an outgoing performed by an outgoing unit which transmits a signal to an outside;
an outgoing history detecting step of, in a case where an incoming is detected, detecting whether sender identification information which is received together with the incoming coincides with identification information stored in the outgoing history storing step or not; and
a step of, in a case where coincidence is detected, changing a notification pattern.

21. A program which refers to storage of an outgoing history to cause a computer to execute an incoming notification control method, wherein the program causes the computer to execute:
a procedure of storing a record of an outgoing which is made by an outgoing unit;
an outgoing history detecting procedure of, in a case where an incoming is sensed, detecting whether sender identification information which is received together with the incoming coincides with identification information stored in the outgoing history storing step or not; and
a procedure of, in a case where coincidence is detected, changing a notification pattern.

## Amended claims

### Amended claims under Art. 19.1 PCT

**1.** *(Amended)* A communication terminal, comprising:
an outgoing unit which is configured to transmit a signal to an outside;
an incoming unit which is configured to receive a signal from the outside;
a notification unit which is configured to notify of reception of the signal;
an outgoing history storage unit in which an outgoing record is stored;
an outgoing history detection unit which is configured, in a case where an incoming is sensed by the incoming unit, to search sender identification information that is received together with the incoming, and to detect whether identification information coincident with the outgoing history storage unit exists or not;
a notification control unit which is configured, in a case where coincident identification information is detected by the outgoing history detection unit, to change a notification pattern in the notification unit;
an outgoing history analysis unit, wherein
in a case where an incoming is received from a counterparty after a previous outgoing is made to the counterparty, a record of the incoming is stored in the storage unit,
the outgoing history analysis unit analyzes existence or nonexistence of a previous response stored in the storage unit, and
in a case where the incoming is received from the counterparty from which, after the outgoing, the incoming is not received, the notification control unit changes the notification pattern.

**2.** *(Amended)* A communication terminal, comprising:
an outgoing unit which is configured to transmit a signal to an outside;
an incoming unit which is configured to receive a signal from the outside;
a notification unit which is configured to notify of reception of the signal;
an outgoing history storage unit in which an outgoing record is stored;
an outgoing history detection unit which is configured, in a case where an incoming is sensed by the incoming unit, to search sender identification information that is received together with the incoming, and to detect whether identification information coincident with the outgoing history storage unit exists or not;
a notification control unit which is configured, in a case where coincident identification information is detected by the outgoing history detection unit, to change a notification pattern in the notification unit; and
an outgoing history analysis unit, wherein
the outgoing history analysis unit analyzes whether, in outgoing histories stored in the storage unit, an incoming is received from a counterparty to which an outgoing is lastly made or not, and
in a case where coincidence with the incoming received from the counterparty to which the outgoing is lastly made is attained, the notification control unit changes the notification pattern.

**3.** *(Amended)* A communication terminal, comprising:
an outgoing unit which is configured to transmit a signal to an outside;
an incoming unit which is configured to receive a signal from the outside;
a notification unit;
a personal information storage unit in which a telephone and mail address of a counterparty are stored correspondingly;
an outgoing history storage unit in which outgoing histories of a telephone and a mail are stored;
an outgoing history detection unit which is configured, in a case where a mail incoming is detected by the incoming unit, to search whether a mail address that is received together with the incoming exists in the personal information storage unit (an address book), and in a case where a coincident mail address exists, to detect whether a telephone number corresponding to the mail address exists in the outgoing history storage unit or not; and
a notification control unit which is configured, in a case where the outgoing history detection unit detects that the telephone number exists in the outgoing history storage unit, changes a notification pattern in the notification unit.

**4.** *(Amended)* A communication terminal, comprising:
an outgoing unit which is configured to transmit a signal to an outside;
an incoming unit which is configured to receive a signal from the outside;
a notification unit;
a personal information storage unit in which a telephone and mail address of a counterparty are stored correspondingly;
an outgoing history storage unit in which outgoing histories of a telephone and a mail are stored;
an outgoing history detection unit which is configured, in a case where a telephone incoming is detected by the incoming unit, to detect whether a mail address corresponding to the incoming telephone number exists in the outgoing history storage unit or not; and
a notification control unit which is configured, in a case where the outgoing history detection unit detects that a coincident mail address exists, changes a notification pattern in the notification unit.

**5.** *(Cancelled)*

**6.** *(Cancelled)*

**7.** *(Cancelled*

**8.** *(Cancelled*

**9.** *(Cancelled)*

**10.** *(Cancelled)*

**11.** *(Cancelled)*

**12.** *(Cancelled)*

**13.** *(Cancelled)*

**14.** *(Cancelled)*

**15.** *(Cancelled)*

**16.** *(Cancelled*

**17.** *(Cancelled)*

**18.** *(Cancelled)*

**19.** *(Cancelled)*

**20.** *(Cancelled)*

**21.** *(Cancelled)*
